# EUROPEAN PATENT SPECIFICATION

(11) **EP 3 832 148 B1**
(45) Date of publication and mention of the grant of the patent: **16.08.2023**
(21) Application number: 20383014.6
(22) Date of filing: 20.11.2020
(51) Int. Cl.: F16B 5/06, F16B 21/07

(54) **COUPLING DEVICE**
KOPPLUNGSVORRICHTUNG
DISPOSITIF DE COUPLAGE

(30) Priority: 05.12.2019 ES 201931083
(43) Date of publication of application: 09.06.2021
(73) Proprietor: Seat, S.A., 08760 Martorell (ES)
(72) Inventor: CORULL MASSANA, Ernest, 08760 Martorell (ES); MORóN MORTE, Juan Carlos, 08760 Martorell (ES)
(74) Representative: Elzaburu S.L.P.

(56) References cited:
- CN-A- 110 131 272
- DE-A1-102011 052 190
- US-B1- 10 408 248

## Description

### Object of the Invention

The object of the present invention is a coupling device. More particularly, the present invention can be applied to the coupling of a vehicle accessory (such as an indicator light) to a structural element or panel of the vehicle.

The coupling device object of the present invention enables the accessory to be coupled to a panel of the vehicle in a simple and reliable way, and which ensures the absorption of the dimensional tolerances of the elements involved in said coupling.

The coupling device object of the present invention has special application in the field of the automobile industry and, more specifically, in the field of accessories that are fastened to the bodywork of a vehicle, such as the exterior lighting devices that a vehicle incorporates.

### Background of the Invention and Technical Problem to Solve

There are many elements and accessories in a vehicle that must be attached to a structural element, by fastening a pin or projection of the housing of the accessory to a hole in the structural element.

An example is the fastening of the front or rear indicator lights to the vehicle. The indicator lights comprise a housing from which two or more pins usually extend for fastening to a structural element or panel located in an accommodation of the bodywork or under the bodywork of the vehicle.

Traditionally, the pin is inserted into a hole in the panel and fastened by means of a fastening means.

The problem appears when, due to inaccuracies (which in many cases are unavoidable) in the manufacturing process, the manufactured elements (pins, housings, etc.) do not have the exact design measurements, but instead have dimensional tolerances. These tolerances can cause the accessories to be installed in the vehicle to not fit correctly, presenting deviations in the axes of the pin, or deviations in size or position, which can cause the elements to fit in a forced manner in the panel or structural element of the vehicle. This forced fit can end up producing vibrations or even cracks and breaks in the elements of the vehicle and/or in the accessory installed in the vehicle.

Document DE 102011052190 A1 is known from the prior art. This document discloses a plug-in coupling device comprising a negative coupling part and a positive coupling part consisting of a pin having a ball head. The negative coupling part comprises a coupling construction made of a first material for accommodating and detachably fastening the positive coupling part, and a retaining construction made of a second material, which surrounds the coupling construction, for fastening the negative coupling part to the second component, wherein the second material has a higher elasticity than the first material, such that component vibrations can be absorbed by the retaining construction.

### Description of the invention

In order to solve the aforementioned drawbacks, the present invention relates to a coupling device for coupling to a structural element according to claim 1.

Said structural element is typically a panel, and preferably a panel of a vehicle. Thus, the coupling device enables a third component to be retained to the panel. Advantageously, the present invention enables tolerances to be absorbed or compensated in the aforementioned retention of the third component to the panel. The tolerances are the result of the dimensional variabilities of the production processes, the dimensional variabilities that are introduced in the assembly and fastening of the parts, which can cause said parts to not fit correctly in the conventional assembly processes. In order to guarantee a correct nominal position between the different parts, it is necessary to absorb or compensate for said tolerances.

The coupling device enables a fastening pin (for example one of the pins of the housing of a vehicle indicator light) to be coupled to the structural element, through the coupling device.

The coupling device comprises a main body. Said main body in turn comprises:
- a cap, wherein the cap creates a hollow space, with at least one side wall, wherein the hollow space is suitable for receiving the fastening pin; the geometry of the cap can be with a single curved surface or surface of revolution, or prismatic or frusto-pyramidal with a plurality of side walls, which define said hollow space;
- a base located at a first end of the cap, wherein the base defines an opening suitable for receiving the fastening pin in the hollow space of the main body;
- fastening means suitable for fastening the coupling device to the structural element;
- retaining means, arranged on the inner surface of the side wall, wherein the retaining means are suitable for retaining the fastening pin in the cap, once said fastening pin has been inserted into the hollow space created by the cap.

The main body is formed of plastic material and comprises tolerance compensating means, said means being substantially deformable, in such a way as to make it possible to adjust at least one dimension in the assembly of the fastening pin with respect to the structural element.

Cap is understood as the portion of the main body formed by a single piece of deformable plastic material or rubber, which creates the hollow space intended to house the pin.

The at least one side wall of the cap connects the first end of the cap with a second terminal end of the cap.

The tolerance compensating means enable a longitudinal or transverse dimension to be adjusted in the assembly of the fastening pin.

The different elements involved in the assembly (housing of the indicator light, pin of the housing, panel or structural element, hole in the panel, etc.) have dimensions manufactured with certain degrees of tolerance, in such a way that, at the time of assembly, it may be the case that the elements do not fit with all the clearance or separation that would be desirable between the different elements. This can make the assembly process difficult, causing the elements to be forced against each other, and even causing deviations when elements are fitted together with each other. This creates an aesthetic and even structural problem, due to poorly absorbed vibrations that can occur while driving the vehicle, and that could lead to cracks in the elements that are involved in the assembly.

By means of the coupling device object of the present invention, these tolerances can be absorbed, both in a transverse axis (Y or Z) and in a longitudinal axis (X) of the pin and the device, by means of the controlled deformation of the tolerance compensating means, while allowing the pin to be retained in the coupling device and therefore retaining the housing to the structural member.

Preferably, the base of the main body comprises a lip arranged on the perimeter of said base. This lip is substantially deformable and is configured to come into contact with a surface of the structural element (typically with a surface surrounding a hole in the panel or structural element). This lip enables sealing to be provided at the joint between the coupling device and the structural element, by means of a contact around the entire perimeter of the base.

According to a possible embodiment of the invention, the retaining means comprise at least one projection, wherein said at least one projection is configured to be inserted into at least one corresponding recess of the pin. Alternatively, the retaining means could comprise at least one recess into which at least one projection of the pin would be inserted.

A correct longitudinal fastening of the pin in the device is ensured by means of these retaining means, preventing the pin from accidentally coming out through the opening of the cap.

The tolerance compensating means are arranged connecting the at least one side wall of the cap to the base, wherein the tolerance compensating means comprise a plurality of folds distributed in an annular manner in the at least one side wall of the cap, in transverse planes of the cap, according to the advance in the longitudinal direction from the first end, wherein the base of the main body is located, to the second terminal end of the cap. These folds thus make up a geometry in the shape of an accordion or bellows, which enables longitudinal and transverse tolerances to be absorbed.

The folds preferably comprise a greater thickness in the areas substantially perpendicular to the longitudinal direction than the thickness of the areas substantially parallel to said longitudinal direction. In this way, the side wall is reinforced in the areas that are most likely to be stretched when tolerances are absorbed during assembly, facilitating a transverse deformation of the tolerance compensating means and making a longitudinal deformation thereof difficult. Regulating the thickness and/or the material of the tolerance compensating means regulates the deformation capacity thereof and, therefore, the adjustability of the at least one dimension or size in the assembly of the fastening pin with respect to the structural element.

Preferably, according to the first embodiment of the coupling device, the device is obtained by a single injection process, consisting of a deformable soft plastic or rubber.

Preferably, according to this first embodiment of the coupling device, the fastening means comprise a perimeter groove arranged in an outer fold of the tolerance compensating means, and wherein the perimeter groove of the base and the perimeter lip cooperate to fasten the coupling device to the structural element or panel. This facilitates the assembly of the coupling device on the panel, adjusting to a perimeter wall or edge of the layer that defines the hole in the panel.

In a second embodiment of the coupling device, the device additionally comprises an auxiliary body made of plastic material, wherein the auxiliary body comprises a support, capable of being supported on the base of the main body, wherein the auxiliary body consists of a rigid or semi-rigid plastic that covers the second terminal end of the cap and at least one portion of the at least one side wall of the cap.

The auxiliary body is obtained by means of an injection process, independent of the injection process by means of which the main body is manufactured.

This auxiliary body enables the rigidity of the coupling device to be increased, limiting the maximum deformations that the device may undergo to absorb tolerances during assembly, and also increasing the fastening action of the fastening means of the base of the device, by preventing them from excessively deforming and the device from being released from the structural element.

Preferably, the auxiliary body covers the main body only in a transverse direction (Y or Z), not covering the other transverse direction. Covering is understood as being arranged adjacent and parallel to the outer surface of the side walls of the cap. There may be a gap between said outer surface of the side walls and the auxiliary body or there may be direct contact between the two, depending on whether a greater or lesser degree of tolerance compensation is desired in said transverse direction. When direct contact occurs between the outer surface of the side wall of the main body and the auxiliary wall, the movement of the cap is blocked. Tolerance compensation will only be carried out by deformation of the side wall, which is made of a soft plastic material.

Preferably in this second embodiment, the aforementioned auxiliary body is configured to come into contact with the second terminal end of the cap and/or come into contact with one or more of the folds of the tolerance compensating means, such that the auxiliary body enables a movement of the main body in the longitudinal direction to be limited.

Initially (before the assembly of the pin) there would be a certain air gap between the second terminal end and/or the folds of the cap and the auxiliary body. After the movement of the cap at the time of assembly/insertion of the pin into the cap, the aforementioned contact would occur between the second terminal end and/or the folds of the cap and the auxiliary body. In this way, the auxiliary body limits (but enables) a certain degree of deformation of the cap.

Also in this second embodiment, the fastening means preferably comprise at least one groove arranged on an outer surface of the auxiliary body, and wherein the at least one groove of the auxiliary body and the perimeter lip of the base cooperate to fasten the coupling device to the structural element or panel. This makes it possible to facilitate the assembly of the coupling device on the panel, adjusting to an edge of a hole in the panel.

In a third embodiment of the coupling device, which is not part of the present invention, the tolerance compensating means do not comprise the set of folds.

According to this third embodiment, which is not part of the present invention, the coupling device comprises an auxiliary body made of plastic material, wherein the coupling device is made by means of a bi-injection process, consisting of a double injection of a first soft plastic or rubber material, forming the main body, and a second rigid or semi-rigid plastic material, forming the auxiliary body, wherein the auxiliary body comprises a support that comes into contact with the base of the main body, wherein the auxiliary body covers the second terminal end of the cap and at least one portion of the at least one side wall of the cap.

According to this third embodiment, which is not part of the present invention, of the coupling device, the tolerance compensating means are arranged on the at least one side wall of the cap that defines the hollow space, wherein said side wall is made of soft plastic or rubber material and is suitable for being deformed by a pressure exerted by the fastening pin, said deformation being limited by the rigid or semi-rigid plastic of the auxiliary body that covers the side wall of the cap.

Thus, both the hardness of the material of the main body and the thickness thereof define the degree of adjustment of the at least one dimension in the assembly of the fastening pin with respect to the structural element. Additionally, in order to control the maximum deformation and, therefore, the maximum desirable tolerance in the joint between both components, the auxiliary body made of rigid material comes into contact with the main body, defining said position. As mentioned above, coating only occurs between the auxiliary body and the outer surface of the main body in a transverse direction.

Also according to this third embodiment, which is not part of the present invention, the fastening means preferably comprise at least one groove arranged on an outer surface of the auxiliary body, and wherein the at least one groove of the auxiliary body and the perimeter lip of the base cooperate to fasten the coupling device to the structural element or panel. This makes it possible to facilitate the assembly of the coupling device on the panel, adjusting to an edge of a hole in the panel.

The present invention also relates to a motor vehicle comprising at least one lighting module, wherein the lighting module (or indicator light) comprises at least one fastening pin for fastening to a structural element (or panel) of the vehicle, wherein the at least one fastening pin is retained to the structural element of the vehicle by means of at least one coupling device as described above according to any of the indicated embodiments, and wherein the cap of the coupling device is configured to be inserted into a hole in the structural element and to be fastened to an edge of said hole by means of the fastening means, wherein the coupling device enables at least one dimension to be adjusted in the assembly of the fastening pin with respect to the structural element, by means of the compensating means of substantially deformable tolerances.

### Brief description of the figures

The following figures have been included as part of the description of at least one embodiment of the invention.
Figure 1 shows a perspective view of a first embodiment of the coupling device.
Figure 2 shows a cross-sectional view of the first embodiment of the coupling device.
Figure 3 shows a perspective view of a second embodiment of the coupling device.
Figure 4 shows a cross-sectional view of the second embodiment of the coupling device.
Figure 5 shows a cross-sectional view equivalent to that shown in Figure 4, wherein the fastening pin is additionally observed.
Figure 6 shows a perspective view of a third embodiment of the coupling device, which is not part of the present invention.
Figure 7 shows a view partially in cross-section (according to a Y-cut plane) and partially in perspective of the third embodiment of the coupling device, which is not part of the present invention, assembled on the structural element.
Figure 8 shows a cross-sectional view of the third embodiment of the coupling device, which is not part of the present invention, according to a Z-cut plane.

### Detailed description

The present invention relates, as mentioned above, to a coupling device (100), more specifically, a coupling device (100) for coupling to a structural element (300), and more specifically, a device (100) for coupling a fastening pin (200) to a structural element (300).

The device (100) makes it possible to couple and assemble, by way of example, an indicator light of a vehicle to a structural element (300) or assembly panel of the vehicle.

The coupling device (100) comprises a main body with a cap (101) or cover, configured to receive a pin (200) of the housing of the indicator light.

The main body comprises fastening means (102) for fastening to the structural element (300) or panel of the vehicle.

Specifically, the cap (101) is configured to be arranged in a hole (301) in the structural element (300) or panel of the vehicle, and the fastening means (102) are configured to enable the cap (101) to be fastened to the edge of the aforementioned hole (301) in the structural element (300) or panel of the vehicle. The cap (101) comprises a side wall (104).

The main body of the device (100) comprises a base (105) located in correspondence with a first end (106) of the cap (101). The fastening means (102) may be located at the base (105) of the main body.

An opening (108) configured to receive the fastening pin (200) is located in correspondence with the first end (106) of the cap (101). The cap (101) further comprises a second terminal end (107) opposite the first end (106). Preferably, the second terminal end (107) is closed.

Thus, the cap (101) is configured to be inserted into the aforementioned hole (301) in the structural element (300) or panel and receive, through the opening (108) and in correspondence with the inner or concave surface (inner surface of the side wall (104)) of the cap (101), the fastening pin (200).

The main body of the device comprises retaining means (109) arranged on the inner surface of the side wall (104). These retaining means (109) enable the pin (200) to be retained inside the cap (101).

Preferably, the retaining means (109) comprise an internal projection of the cap (101), wherein said projection is configured to be inserted into a corresponding recess (201) existing in the pin (200). This internal projection enables, once the pin (200) has been inserted into the cap (101), the pin (200) to be retained inside the cap (101) preventing the longitudinal movement thereof out of the cap (101).

The main body comprises tolerance compensating means (110), these tolerance compensating means being substantially deformable to enable the manufacturing tolerances of the pin (200) and of the structural element (300) to be absorbed, thus enabling the adjustment of at least one dimension in the assembly of the pin (200) with respect to the structural element (300).

The tolerance compensating means (110) can enable the absorption of dimensional tolerances in the longitudinal direction of the pin (200) and the cap (101) (along the X axis), or in any of the transverse directions of the pin (200) and the cap (101) (Y axis or Z axis), as explained below.

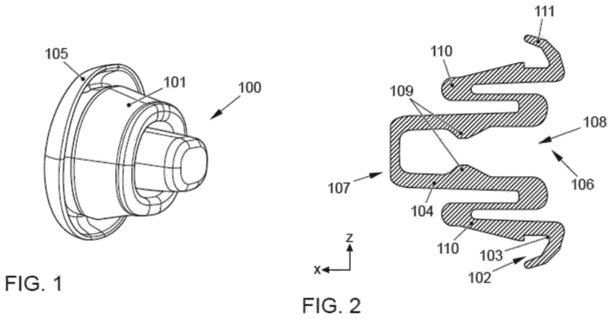

According to a first embodiment of the device (100) shown in Figure 1 and Figure 2, the tolerance compensating means (110) comprise a set of folds distributed in an annular manner on the side wall of the cap (101), in transverse planes of the cap (101).

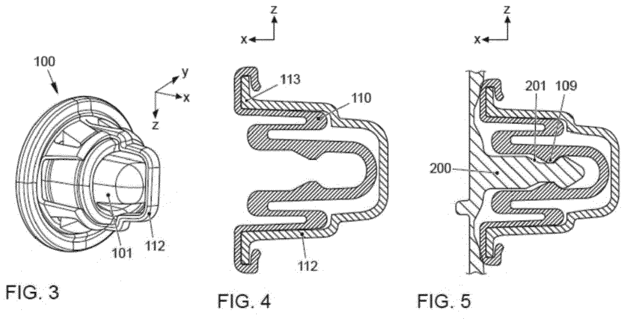

According to a second embodiment of the device (100) shown in Figure 3, Figure 4 and Figure 5, the tolerance compensating means (110) further comprise the aforementioned set of folds.

These folds form a geometry that resembles the geometry of bellows or an accordion. By means of this bellows structure, if the inserted pin (200) is not perfectly aligned with the longitudinal axis (X axis) of the cap (101), the tolerance compensating means (110) enable the position thereof to be adjusted to guarantee a correct positioning of the assembly between the pin (200) and the structural element (300).

Thus, there are three cases where the assembly of the fastening pin (200) with respect to the structural element (300) is not optimal, such that it is necessary to adjust a transverse dimension by means of the tolerance compensating means (110):
a) longitudinal axis (X axis) of the pin is not parallel to the longitudinal axis (X axis) of the cap (101), that is to say, there is a misalignment between the axes. To compensate for said alignment deficiency and adjust the transverse assembly dimensions between both components, the lower area of the tolerance compensating means (110) contracts and the upper area extends (and vice versa at the opposite transverse end of the tolerance compensating means (110)) according to the direction of said misalignment.
b) longitudinal axis (X axis) of the pin is parallel to the longitudinal axis (X axis) of the cap (101) but they do not coincide. Thus, to compensate for said movement, a first end of the tolerance compensating means (110) is compressed, with less distance between the folds, and the second end opposite the first end in the transverse direction is extended, widening the distance between the folds.
c) Combination of both cases explained above.

The base (105) of the main body comprises a perimeter contour or lip (111), made of soft material. Said perimeter lip (111) is configured to completely cover the perimeter edge of the hole (301) in the structural element (300) or panel, ensuring a perfect seal that prevents the passage of water or other liquids between the structural element (300) or panel and the perimeter lip (111).

In both the first and second embodiments, the cap (101) of the coupling device (100) is obtained with a single injection process, consisting of a deformable soft plastic or rubber.

The folds that make up the tolerance compensating means (110) have greater thickness in the areas perpendicular to the longitudinal direction (direction along the X axis), thus seeking greater ease of movement of the cap (101) in transverse directions (Y or Z) and greater difficulty of movement of the cap (101) in a longitudinal direction (Z).

The perimeter lip (111) is configured to be arranged on the rim of the hole (301) in the structural element (300) or panel, in correspondence with a first side (or outer side) of the structural element (300) or panel. The rest of the volume of the cap (101) is configured to be inserted into the hole (301) and protrude through a second side (or inner side) of the structural element (300) or panel.

According to the first and second embodiments of the coupling device (100), the fastening means (102) comprise a perimeter groove (103) arranged in an outer fold of the tolerance compensating means (110). This perimeter groove (103) is located in correspondence with the base (105) of the main body and cooperates with the aforementioned perimeter lip (111) to fasten the coupling device (100) to the structural element (300) or panel.

Thus, the perimeter lip (111) is configured to be on the first side (or outer side) of the structural element (300) or panel, while the edge of the hole (301) in the structural element (300) or panel remains inserted into the groove (103).

According to the second embodiment of the coupling device (100) shown in Figure 3, Figure 4 and Figure 5, the device (100) comprises an auxiliary body (112) made of rigid or semi-rigid plastic material. This auxiliary body (112) has a support (113) located on the base (105) of the main body, and has an area that covers the second terminal end (107) of the cap (101), and another area that covers a portion of the side wall (104) of the cap (101).

This auxiliary body (112) of the second embodiment of the device (100) is manufactured according to an injection process independent of the injection process of the cap (101).

Preferably, the auxiliary body (112) of the second embodiment of the coupling device (100) is configured to come into contact with the second terminal end (107) of the cap (101) and/or with one or more of the folds of the tolerance compensating means (110). This contact takes place before the deformation that the cap (101) undergoes due to the insertion of the pin (200) and the absorption of dimensional tolerances, in such a way that the auxiliary body (112) limits the maximum deformation that the cap (101) can undergo at those points of contact. Thus, the insertion of the pin (200) into the hollow space defined by the cap (101) in the longitudinal direction (X) tends to move the cap (101) in said longitudinal direction (X), especially in the contact of the pin (200) with the retaining means (109), and especially when the pin (200) is not in the nominal assembly position thereof with respect to the cap (101). Thus, said pressure exerted by the pin (200) on the cap (101) tends to undo the folds of the tolerance compensating means (110). Thus, the auxiliary body (112) comes into contact with the main body limiting said movement, thus allowing a tolerance compensation in the Z axis but guaranteeing the correct operation of the tolerance compensating means (110).

Preferably, the auxiliary body (112) of the second embodiment of the coupling device (100) laterally covers the main body, especially in a transverse direction. In the example shown in Figure 3, the auxiliary body (112) covers the main body essentially in the Z direction. Thus, the maximum movement of the tolerance compensating means (110) in said transverse direction is limited, thus limiting the maximum movement of the cap (101) in said direction. A maximum dimensional fit in the transverse direction is thus established in the assembly of the fastening pin (200) with respect to the structural element (300).

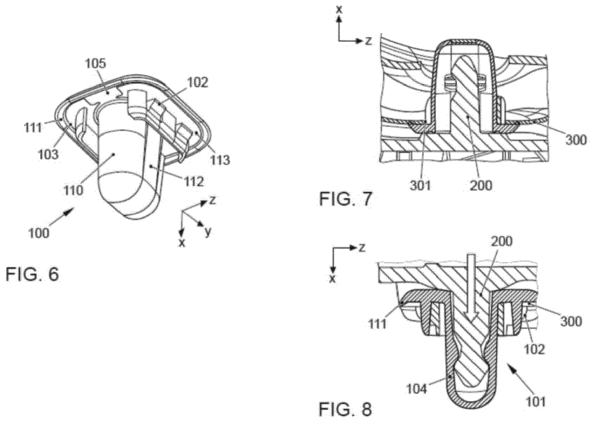

According to a third embodiment of the coupling device (100), which is not part of the present invention, shown in Figure 6, Figure 7 and Figure 8, the tolerance compensating means (110) do not comprise the set of folds.

In the third embodiment, which is not part of the present invention, the tolerance compensating means (110) consist of the side wall (104) itself of the cap (101). Thus, the choice of the soft and deformable material that constitutes the side walls of the cap (101) and the thickness thereof define the deformation capacity of the tolerance compensating means (110). Thus, when the longitudinal axis (Z axis) of the pin is moved or misaligned with respect to the longitudinal axis (Z axis) of the cap (101), it causes pressure and compression of the side walls of said cap (101). Said deformation makes it possible to adjust the dimension in the assembly of the fastening pin (200) with respect to the structural element (300). The existence of the auxiliary body (112) in contact with the outer surfaces of the side walls of the main body (covering the side walls in the transverse direction Z) defines a maximum deformation of the cap (101) and, therefore, a maximum compensation in said transverse direction.

Furthermore, according to this third embodiment of the coupling device (100), which is not part of the present invention, the device (100) comprises an auxiliary body (112) made of rigid or semi-rigid plastic material. In this third embodiment, the coupling device (100) is made in a single bi-injection process, consisting of a double injection of a first soft plastic or rubber forming the cap (101) of the main body, and a second rigid or semi-rigid plastic forming the auxiliary body (112).

According to this third embodiment, which is not part of the invention, the auxiliary body (112) has a support (113) that comes into contact with the base (105) of the main body, the auxiliary body (112) covering the second terminal end (107) of the cap (101) and at least one portion of the side wall (104) of the cap.

In the third embodiment, which is not part of the present invention, it is observed how the pin (200) is inserted into the cap (101) in a fitted manner (see Figure 8) in one of the transverse directions (along the Z axis in correspondence with the auxiliary body), and has a clearance (see Figure 7) in the other transverse direction (along the Y axis) as well as in the longitudinal direction (along the X axis). The auxiliary body (112) limits the deformation of the main body in the transverse direction along the Z axis, ensuring that the retaining means (109) retain the fastening pin (200) in the cap (101).

Also according to this third embodiment, which is not part of the present invention, the fastening means (102) comprise a perimeter groove (103) arranged on an outer surface of the auxiliary body (112). This perimeter groove (103) is located in correspondence with the base (105) of the main body and cooperates with the perimeter lip (111) to fasten the coupling device (100) to the structural element (300) or panel.

According to the third embodiment, which is not part of the present invention, the fastening means (102) are located on the auxiliary body, in correspondence with the base (105) of the main body, and said fastening means (102) comprise a clip made of semi-rigid material, that exerts a certain resistance when the cap (101) is inserted through the hole (301) in the structural element (300) or panel. However, once said resistance is overcome, the clip being deformed for the insertion of the cap (101), the clip recovers its initial geometry, protruding outside the edge of the hole (301), in correspondence with the second side (inner side) of the structural element (300) or panel. This arrangement of the clip prevents the cap (101) from coming out of the hole (301) in the structural element (300) or panel on the first side (outer side) of the structural element (300) or panel, through which the cap (101) was inserted into the hole (301). The perimeter lip (111) prevents the cap (101) from coming out of the hole (301) through the second side (inner side) of the structural element (300) or panel.

## Claims

1. A coupling device (100) for coupling to a structural element (300), wherein the device (100) comprises a main body, wherein the main body comprises:
- a cap (101), wherein the cap (101) creates a hollow space, with at least one side wall (104), wherein the hollow space is suitable for receiving a fastening pin (200),
- a base (105) located at a first end (106) of the cap (101), wherein the base (105) defines an opening (108) suitable for receiving the fastening pin (200) in the hollow space of the main body,
- fastening means (102) suitable for fastening the coupling device (100) to the structural element (300),
- retaining means (109), arranged on the inner surface of the side wall (104), wherein the retaining means (109) are suitable for retaining the fastening pin (200) in the cap (101),
wherein the main body is formed of plastic material, wherein the main body comprises substantially deformable tolerance compensating means (110) such that they enable at least one dimension to be adjusted in the assembly of the fastening pin (200) with respect to the structural element (300);
**characterized in that** the tolerance compensating means (110) are arranged connecting the side wall (104) of the cap (101) to the base (105), wherein the tolerance compensating means (110) comprise a plurality of folds distributed in an annular manner on the side wall (104) of the cap (101), in transverse planes of the cap (101), according to the advance in the longitudinal direction from the first end (106), wherein the base (105) of the main body is located, to a second terminal end (107) of the cap (101).

2. The coupling device (100) according to claim 1, **characterised in that** the base (105) of the main body comprises a lip (111) arranged on the perimeter of said base (105), wherein the lip (111) is substantially deformable and is configured to come into contact with a surface of the structural element (300).

3. The coupling device (100) according to any of the preceding claims, **characterised in that** the retaining means (109) comprise at least one projection, wherein said at least one projection is configured to be inserted into at least one corresponding recess (201) of the pin (200).

4. The coupling device (100) according to claim 1, **characterised in that** the folds comprise a greater thickness in the areas substantially perpendicular to the longitudinal direction than the thickness of the areas substantially parallel to said longitudinal direction.

5. The coupling device (100) according to any of the preceding claims, **characterised in that** the coupling device (100) is obtained by a single injection process, consisting of a deformable soft plastic or rubber.

6. The coupling device (100) according to any of claims 1 to 5, **characterised in that** the fastening means (102) comprise a perimeter groove (103) arranged in an outer fold of the tolerance compensating means (110), and wherein the perimeter groove (103) of the base (105) and the perimeter lip (111) cooperate to fasten the coupling device (100) to the structural element (300).

7. The coupling device (100) according to claim 1, **characterised in that** it additionally comprises an auxiliary body (112) made of plastic material, wherein the auxiliary body (112) comprises a support (113), capable of being supported on the base (105) of the main body, wherein the auxiliary body (112) consists of a rigid or semi-rigid plastic that covers the second terminal end (107) of the cap (101) and at least one portion of the side wall (104) of the cap (101).

8. The coupling device (100) according to claim 7, **characterised in that** the auxiliary body (112) is configured to come into contact with the second terminal end (107) of the cap (101) and/or come into contact with one or more of the folds of the tolerance compensating means (110), so that the auxiliary body (112) enables a movement of the main body in the longitudinal direction to be limited.

9. The coupling device (100) according to any of claims 7 or 8, **characterised in that** the fastening means (102) comprise at least one groove (103) arranged on an outer surface of the auxiliary body (112), and wherein the at least one groove (103) of the auxiliary body (112) and the perimeter lip (111) of the base (105) cooperate to fasten the coupling device (100) to the structural element (300).

10. A motor vehicle comprising at least one lighting module, wherein the lighting module comprises at least one fastening pin (200) for fastening to a structural element (300) of the vehicle, wherein the vehicle is **characterised in that** the at least one fastening pin (200) is retained to the structural element (300) of the vehicle by means of at least one coupling device (100) according to any of the preceding claims, wherein the cap (101) is configured to be inserted into a hole (301) in the element structural (300) and to be fastened to an edge of said hole (301) by means of the fastening means (102), wherein the coupling device (100) enables at least one dimension to be adjusted in the assembly of the fastening pin (200) with respect to the structural element (300).

## Patentansprüche

1. Kopplungsvorrichtung (100) zum Koppeln eines strukturellen Elements (300), wobei die Vorrichtung (100) einen Hauptkörper umfasst, wobei der Hauptkörper Folgendes umfasst:
- eine Kappe (101), wobei die Kappe (101) einen hohlen Raum mit mindestens einer Seitenwand (104) erzeugt, wobei der hohle Raum geeignet ist, um einen Befestigungsstift (200) aufzunehmen,
- eine Basis (105), die sich an einem ersten Ende (106) der Kappe (101) befindet, wobei die Basis (105) eine Öffnung (108) definiert, die geeignet ist, um den Befestigungsstift (200) im hohlen Raum des Hauptkörpers aufzunehmen,
- Befestigungsmittel (102), die geeignet sind, um die Kopplungsvorrichtung (100) an das strukturelle Element (300) zu befestigen,
- Rückhaltemittel (109), die auf der inneren Fläche der Seitenwand (104) angeordnet sind, wobei die Rückhaltemittel (109) geeignet sind, um den Befestigungsstift (200) in der Kappe (101) zurückzuhalten,
wobei der Hauptkörper aus Kunststoffmaterial gebildet ist, wobei der Hauptkörper im Wesentlichen verformbare toleranzkompensierende Mittel (110) umfasst, so dass sie ermöglichen, dass mindestens eine Abmessung in der Anordnung des Befestigungsstifts (200) mit Bezug auf das strukturelle Element (300) angepasst wird;
**dadurch gekennzeichnet, dass** die toleranzkompensierenden Mittel (110) derart angeordnet sind, dass sie die Seitenwand (104) der Kappe (101) mit der Basis (105) verbinden, wobei die toleranzkompensierenden Mittel (110) eine Vielzahl von Falten umfassen, die auf eine ringförmige Weise auf der Seitenwand (104) der Kappe (101) in Querebenen der Kappe (101) gemäß dem Vorschub in der Längsrichtung vom ersten Ende (106) verteilt sind, wobei sich die Basis (105) des Hauptkörpers an einem zweiten terminalen Ende (107) der Kappe (101) befindet.

2. Kopplungsvorrichtung (100) nach Anspruch 1, **dadurch gekennzeichnet, dass** die Basis (105) des Hauptkörpers eine Lippe (111) umfasst, die auf dem Umfang der Basis (105) angeordnet ist, wobei die Lippe (111) im Wesentlichen verformbar und konfiguriert ist, um mit einer Fläche des strukturellen Elements (300) in Kontakt zu kommen.

3. Kopplungsvorrichtung (100) nach Anspruch 1, **dadurch gekennzeichnet, dass** die Rückhaltemittel (109) mindestens einen Vorsprung umfassen, wobei der mindestens eine Vorsprung konfiguriert ist, um in mindestens eine entsprechende Aussparung (201) des Stifts (200) eingeführt zu werden.

4. Kopplungsvorrichtung (100) nach Anspruch 1, **dadurch gekennzeichnet, dass** die Falten eine größere Dicke in den Bereichen, die im Wesentlichen senkrecht zur Längsrichtung sind, als in den Bereichen umfassen, die im Wesentlichen parallel zu der Längsrichtung sind.

5. Kopplungsvorrichtung (100) nach einem der vorhergehenden Ansprüche, **dadurch gekennzeichnet, dass** die Kopplungsvorrichtung (100) durch einen einzigen Spritzvorgang erhalten wird, der aus einem verformbaren weichen Kunststoff oder Gummi besteht.

6. Kopplungsvorrichtung (100) nach einem der Ansprüche 1 bis 5, **dadurch gekennzeichnet, dass** die Befestigungsmittel (102) eine Umfangsnut (103) umfassen, die in einer äußeren Falte der toleranzkompensierenden Mittel (110) angeordnet ist, und wobei die Umfangsnut (103) der Basis (105) und die Umfangslippe (111) zusammenarbeiten, um die Kopplungsvorrichtung (100) an das strukturelle Element (300) zu befestigen.

7. Kopplungsvorrichtung (100) nach Anspruch 1, **dadurch gekennzeichnet, dass** sie außerdem einen Hilfskörper (112) umfasst, der aus Kunststoffmaterial hergestellt ist, wobei der Hilfskörper (112) einen Träger (113) umfasst, der dazu in der Lage ist, auf der Basis (105) des Hauptkörpers getragen zu werden, wobei der Hilfskörper (112) aus einem starren oder halbstarren Kunststoff besteht, der das zweite terminale Ende (107) der Kappe (101) und mindestens einen Abschnitt der Seitenwand (104) der Kappe (101) abdeckt.

8. Kopplungsvorrichtung (100) nach Anspruch 7, **dadurch gekennzeichnet, dass** der Hilfskörper (112) konfiguriert ist, um mit dem zweiten terminalen Ende (107) der Kappe (101) in Kontakt zu kommen und/oder mit einer oder mehreren der Falten der toleranzkompensierenden Mittels (110) in Kontakt zu kommen, so dass der Hilfskörper (112) ermöglicht, dass eine Bewegung des Hauptkörpers in der Längsrichtung begrenzt wird.

9. Kopplungsvorrichtung (100) nach einem der Ansprüche 7 oder 8, **dadurch gekennzeichnet, dass** die Befestigungsmittel (102) mindestens eine Nut (103) umfassen, die auf einer äußeren Fläche des Hilfskörpers (112) angeordnet ist, und wobei die mindestens eine Nut (103) des Hilfskörpers (112) und die Umfangslippe (111) der Basis (105) zusammenarbeiten, um die Kopplungsvorrichtung (100) an das strukturelle Element (300) zu befestigen.

10. Motorfahrzeug, umfassend mindestens ein Beleuchtungsmodul, wobei das Beleuchtungsmodul mindestens einen Befestigungsstift (200) umfasst, um an ein strukturelles Element (300) des Fahrzeugs befestigen zu werden, wobei das Fahrzeug **dadurch gekennzeichnet ist, dass** der mindestens eine Befestigungsstift (200) am strukturellen Element (300) des Fahrzeugs mit Hilfe mindestens einer Kopplungsvorrichtung (100) gemäß einem der vorhergehenden Ansprüche zurückgehalten wird, wobei die Kappe (101) konfiguriert ist, um in ein Loch (301) im strukturellen Element (300) eingeführt und an eine Kante des Lochs (301) mit Hilfe der Befestigungsmittel (102) befestigt zu werden, wobei die Kopplungsvorrichtung (100) ermöglicht, dass mindestens eine Abmessung in der Anordnung des Befestigungsstifts (200) mit Bezug auf das strukturelle Element (300) angepasst wird.

## Revendications

1. Dispositif de couplage (100) pour se coupler à un élément structurel (300), dans lequel le dispositif (100) comprend un corps principal, dans lequel le corps principal comprend :
un capuchon (101), dans lequel le capuchon (101) crée un espace creux, avec au moins une paroi latérale (104), dans lequel l'espace creux est approprié pour recevoir une broche de fixation (200),
une base (105) positionnée au niveau d'une première extrémité (106) du capuchon (101), dans lequel la base (105) définit une ouverture (108) appropriée pour recevoir la broche de fixation (200) dans l'espace creux du corps principal,
des moyens de fixation (102) appropriés pour fixer le dispositif de couplage (100) à l'élément structurel (300),
des moyens de retenue (109) agencés sur la surface interne de la paroi latérale (104), dans lequel les moyens de retenue (109) sont appropriés pour retenir la broche de fixation (200) dans le capuchon (101),
dans lequel le corps principal est formé à partir de matière plastique, dans lequel le corps principal comprend des moyens de compensation de tolérance sensiblement déformables (110) de sorte qu'ils permettent d'ajuster au moins une dimension dans l'assemblage de la broche de fixation (200) par rapport à l'élément structurel (300) ;
**caractérisé en ce que** les moyens de compensation de tolérance (110) sont agencés en raccordant la paroi latérale (104) du capuchon (101) à la base (105), dans lequel les moyens de compensation de tolérance (110) comprennent une pluralité de plis répartis d'une manière annulaire sur la paroi latérale (104) du capuchon (101), dans des plans transversaux du capuchon (101), selon l'avancement dans la direction longitudinale à partir de la première extrémité (106), dans lequel la base (105) du corps principal est positionnée sur une seconde extrémité terminale (107) du capuchon (101).

2. Dispositif de couplage (100) selon la revendication 1, **caractérisé en ce que** la base (105) du corps principal comprend une lèvre (111) agencée sur le périmètre de ladite base (105), dans lequel la lèvre (111) est sensiblement déformable et est configurée pour venir en contact avec une surface de l'élément structurel (300).

3. Dispositif de couplage (100) selon l'une quelconque des revendications précédentes, **caractérisé en ce que** les moyens de retenue (109) comprennent au moins une saillie, dans lequel au moins une saillie est configurée pour être insérée dans au moins un évidement (201) correspondant de la broche (200).

4. Dispositif de couplage (100) selon la revendication 1, **caractérisé en ce que** les plis comprennent une épaisseur plus importante dans les zones sensiblement perpendiculaires à la direction longitudinale que l'épaisseur des zones sensiblement parallèles à ladite direction longitudinale.

5. Dispositif de couplage (100) selon l'une quelconque des revendications précédentes, **caractérisé en ce que** le dispositif de couplage (100) est obtenu par un simple processus d'injection, consistant en un plastique ou caoutchouc souple déformable.

6. Dispositif de couplage (100) selon l'une quelconque des revendications 1 à 5, **caractérisé en ce que** les moyens de fixation (102) comprennent une rainure périmétrale (103) agencée dans un pli externe des moyens de compensation de tolérance (110) et dans lequel la rainure périmétrale (103) de la base (105) et la lèvre périmétrale (111) coopèrent pour fixer le dispositif de couplage (100) à l'élément structurel (300).

7. Dispositif de couplage (100) selon la revendication 1, **caractérisé en ce qu'**il comprend, de plus, un corps auxiliaire (112) réalisé avec une matière plastique, dans lequel le corps auxiliaire (112) comprend un support (113) pouvant être supporté sur la base (105) du corps principal, dans lequel le corps auxiliaire (112) se compose d'un plastique rigide ou semi-rigide qui recouvre la seconde extrémité terminale (107) du capuchon (101) et au moins une partie de la paroi latérale (104) du capuchon (101).

8. Dispositif de couplage (100) selon la revendication 7, **caractérisé en ce que** le corps auxiliaire (112) est configuré pour venir en contact avec la seconde extrémité terminal (107) du capuchon (101) et/ou pour venir en contact avec un ou plusieurs des plis des moyens de compensation de tolérance (110), de sorte que le corps auxiliaire (112) permet de limiter un mouvement du corps principal dans la direction longitudinale.

9. Dispositif de couplage (100) selon l'une quelconque des revendications 7 ou 8, **caractérisé en ce que** les moyens de fixation (102) comprennent au moins une rainure (103) agencée sur une surface externe du corps auxiliaire (112), et dans lequel la au moins une rainure (103) du corps auxiliaire (112) et la lèvre périmétrale (111) de la base (105) coopèrent pour fixer le dispositif de couplage (100) à l'élément structurel (300).

10. Véhicule à moteur comprenant au moins un module d'éclairage, dans lequel le module d'éclairage comprend au moins une broche de fixation (200) pour se fixer à un élément structurel (300) du véhicule, dans lequel le véhicule est **caractérisé en ce que** la au moins une broche de fixation (200) est retenue sur l'élément structurel (300) du véhicule au moyen d'au moins un dispositif de couplage (100) selon l'une quelconque des revendications précédentes, dans lequel le capuchon (101) est configuré pour être inséré dans un trou (301) dans l'élément structurel (300) et pour être fixé à un bord dudit trou (301) au moyen des moyens de fixation (102), dans lequel le dispositif de couplage (100) permet d'ajuster au moins une dimension dans l'assemblage de la broche de fixation (200) par rapport à l'élément structurel (300).
